(19) Europäisches Patentamt
European Patent Office
Office européen des brevets

(11) EP 4 190 849 A1

(12) EUROPEAN PATENT APPLICATION

(43) Date of publication:
07.06.2023 Bulletin 2023/23

(51) International Patent Classification (IPC):
C08K 3/04 (2006.01)    C09D 5/03 (2006.01)
C09D 7/61 (2018.01)

(21) Application number: 22207804.0

(22) Date of filing: 16.11.2022

(52) Cooperative Patent Classification (CPC):
C09D 5/033; C08K 3/04; C08K 3/041; C09D 7/61

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2021 IT 202100029897

(71) Applicant: PLT GmbH
9065 Ebenthal in Kärnten (AT)

(72) Inventors:
• Guarino, Alessandro
9210 Poertschach (AT)
• Vendramin, Roberto
9210 Poertschach (AT)

(74) Representative: PGA S.p.A., Milano, Succursale di
Lugano
Via Castagnola, 21c
6900 Lugano (CH)

(54) POWDER PAINT WITH HIGH THERMAL DISPERSION AND HIGH ELECTRICAL CONDUCTIVITY

(57) The present invention is related to a powder paint comprising graphite, carbon nanotubes and, in an embodiment, graphene. The powder paint according to the present invention is characterized by high thermal dissipation and by high electrical conductivity. The present invention refers also to a production process of said paint.

FIG. 1

EP 4 190 849 A1

**Description**

**FIELD OF THE INVENTION**

The present invention relates to a powder paint comprising graphite, carbon nanotubes and, in an embodiment, graphene. The powder paint according to the present invention is characterized by a high thermal dissipation and by a high electrical conductivity. The present invention refers also to a process for the production of said paint.

**STATE OF THE ART**

The liquid paint is a typically fluid material that is spread over a surface, with esthetical or practical purposes, such as for example protection against ageing or atmospheric agents. A conventional paint is constituted by a film-forming component with adhesive features, known as "binder", by a solvent that makes it liquid and finally, by a softening agent that improves the elastic features once it is dried. According to the type of binder, liquid siccative/non siccative alkyd resin paints, acrylic resin paints, epoxy resin paints, isocyanic/polyurethane resin paints, saturated/unsaturated polyester resin paints, vinyl resin paints, amino/phenolic resin paints and silicone resin paints are available today. Powder paints available today are epoxy powder paints, epoxy-polyester (hybrid) powder paints, polyester powder paints and acrylic powder paints.

Epoxy powder paints offer an optimal mechanical, chemical and corrosion resistance. The main drawback of these products is that the epoxy resins have very poor resistance to UV-rays exposure, anyhow, epoxy powder paints are destined to paint products destined to indoor use.

Polyester-epoxy (hybrid) powder paints represent an economic alternative to epoxy powders and to polyester powders since they confer performance features similar to the one given by epoxy and polyester paints. These paints are capable of polymerizing at very low temperatures 130 - 140°C permitting then significant energy savings for users. Polyester powder paints are products of choice for the application on outer finishing elements since they have a good resistance to UV-rays. Furthermore, polyesters ensure a good corrosion resistance on an suitable metallic support adequately pre-treated, but they are not as performing as the epoxy powders. Acrylic powder paints have long been the system normally adopted in the automotive field regarding the finishing of vehicle shells. Acrylic systems offer optimal resistance to UV-rays and optimal chemical resistance and optimal flow, but mechanical resistances are lower than the ones of polyester systems.

All types of paints above briefly described have a low electrical conductivity and a low thermal dissipation, i.e. typically insulating.

Many industry fields require powder paints with high heat removal. An example for all is the field of components for household and industrial appliances such as compressors for fridges, coils for heat exchangers and so on. These products often undergo an efficiency reduction during time due to the limited induced ventilation, for example, by being embedded in almost sealed furniture.

The use of powder paints nowadays available, typically insulating, used for protective and esthetical purposes, does not help the removal of heat determining a shortening of life of these components, a lower reliability of them during time as well as the need of oversizing of the component in order to solve the abovementioned issues.

The production process of powder paints comprises a step of pre-mixing of the raw materials, a step of extrusion of the mixed product and a step of grinding and sieving of the extruded flakes.

Powder paints comprising individual conductive components such as graphite, graphene or carbon nanotubes are currently available. However, such paints show low thermal dissipation and low electrical conductivity. As a result, in order to achieve acceptable thermal dissipation and electrical conductivity values, such paints must comprise very high initial volumes of graphite or graphene or carbon nanotubes, resulting in an increased cost.

Furthermore, the high percentage of the single component necessary for obtaining a paint having acceptable performances of thermal dissipation and electrical conductivity greatly complicates the production steps in addition to enormously increasing the final cost of the product.

It is therefore necessary to make available a powder paint which has high thermal dissipation and high electrical conductivity.

The need for obtaining a paint having high thermal dissipation and high electrical conductivity by means of a process at acceptable costs is also particularly felt.

**SUMMARY OF THE INVENTION**

The Applicant, using innovative mixing techniques, has reached the difficult target of increasing the capacity of thermal dissipation and electrical conductivity of painted components thanks to the coating of said components with a powder paint comprising graphite, carbon nanotubes and, in an embodiment, graphene. In the present invention, graphite, carbon nanotubes and graphene are indicated as "conductive components". A first aspect of the present invention refers to a powder paint comprising graphite in an amount between 0.15% and 10% by weight relative to the weight of the final paint formulation and carbon nanotubes in an amount from 0.01 % to 3.8%, preferably from 0.1 to 3.8%, by weight relative to the weight of the final paint formulation.

In the powder paint according to the invention carbon nanotubes can be in an amount less than or equal to 1% by weight relative to the final paint formulation.

In this case, the paint comprises a physical mixture constituted by (i) graphite and (ii) carbon nanotubes previously mixed with aluminum hydroxide, preferably in a ratio by weight of 1:9.

In another embodiment, the paint further comprises graphene in an amount from 0.01 % to 4.5%, preferably from 0.1 to 4.5%, by weight relative to the weight of the final paint formulation.

When graphene and carbon nanotubes are in an amount less than or equal to 1% by weight relative to the final paint formulation, powder paint comprises a physical mixture constituted by graphite, graphene and carbon nanotubes, wherein said graphene and said carbon nanotubes in the physical mixture have been each previously mixed with aluminum hydroxide, preferably in a ratio of 1:9 by weight.

The Applicant has been capable of obtaining paints having high thermal dissipation and high electrical conductivity thanks to a process that comprises the use of conductive components in mixture with a synergic effect.

In particular, the Applicant has been capable of obtaining paints having high thermal dissipation and high electrical conductivity thanks to a process that comprises a step of realization of a physical mixture intended to dilute the conductive components (graphene and carbon nanotubes) so as to make them easily usable in the production process with a high conductive yield, both from a thermal and from an electrical point of view.

A second aspect of the present invention refers to a process for the production of a powder paint as above defined that comprises the steps of:

a) subjecting graphite, carbon nanotubes and, optionally, graphene to mixing together with at least one further component chosen from polyester resin, one or more additives chosen from catalyst additive, distending additive, degassing additive, antioxidant and anti-UV additive, at least one polyethylene wax, at least one pigment and barium sulphate, resulting in a homogeneous mixture;
b) extruding the homogeneous mixture according to step (a), obtaining a molten product;
c) cooling the molten product and reducing it to flakes by means of a crusher; and
d) subjecting said flakes to pulverization.

The carbon nanotubes and graphene in the step a) of the process can be each previously mixed with aluminum hydroxide.

Therefore, in an embodiment, the process comprises the step a') of subjecting said carbon nanotubes and, optionally, said graphene to mixing with aluminum hydroxide. This step a') is carried out when the amount of nanotubes and, optionally, of graphene is less than or equal to 1% by weight relative to the weight of the final paint formulation.

## DETAILED DESCRIPTION OF THE INVENTION

The continuous search on the world market of new raw materials to be used for the production of paints and the use of new mixing techniques has stimulated the Applicant to carry out various studies in order to obtain a paint having thermal dissipation and electrical conductivity significantly higher relative to powder paints available today on the market.

The first aspect of the present invention is a powder paint comprising graphite in an amount between 0.15% and 10% by weight relative to the weight of the final paint formulation and carbon nanotubes in an amount from 0.01% to 3.8%, preferably from 0.1 to 3.8%, by weight relative to the weight of the final paint formulation.

In particular, the powder paint according to the invention comprises graphite in an amount from 7 to 10 % by weight relative to the weight of the final paint formulation. The Applicant has observed that the graphite cannot be used in percentages higher than 10% by weight relative to the weight of the final paint formulation, and in percentages less than 7% relative to the weight of the final paint formulation.

In fact, an amount higher than 10% of graphite and less than 7% relative to the weight of the final paint formulation determine a significant decrease of electrical conductivity of powder paint, until reductions in the order of 40-50%.

In a preferred embodiment, the powder paint comprises an amount of graphite comprised in the range between 7% and 8% by weight relative to the weight of the final paint formulation.

The Applicant has also observed that in case of a paint by thermal dissipation, graphite can be used also in percentages until 4% by weight relative to the weight of the final paint formulation. Therefore, in an alternative preferred embodiment, the powder paint according to the invention comprises graphite in an amount from 4% to 10 % by weight relative to the weight of the final paint formulation.

In the paint according to the invention the amount of carbon nanotubes cannot be decreased by 15-20% since this would result in a 40-50% reduction in electrical conductivity.

Therefore, it is essential that the amount of carbon nanotubes does not go under 0.01%, preferably 0.1%, relative to the weight of the final paint formulation.

In the powder paint according to the invention the carbon nanotubes are present in an amount from 0.01% to 3.8%, preferably from 0.1% to 3.8%, by weight relative to the weight of the final paint formulation.

When the powder paint comprises an amount of carbon nanotubes less than or equal to 1% by weight relative to the weight of the final paint formulation, carbon nanotubes are advantageously mixed with a filler, in particular with aluminum hydroxide.

In particular, carbon nanotubes in an amount less than or equal to 1% by weight relative to the weight of the final paint formulation are mixed with aluminum hydroxide in a ratio of from 1:5 to 1:15, preferably from 1:7 to 1:11, advantageously of 1:9 by weight.

At this point, graphite is added to the mixing of carbon nanotubes with aluminum hydroxide as above defined, forming a physical mixture of the two components. In other words, this physical mixture is formed by (i) carbon nanotubes previously mixed with aluminum hydroxide and (ii) graphite.

In the present invention, the physical mixture of carbon nanotubes previously mixed with aluminum hydroxide and graphite is called "physical mixture by electrical conductivity". In particular, the physical mixture by electrical conductivity comprises (i) carbon nanotubes previously mixed with aluminum hydroxide and (ii) graphite in a ratio of from 5:95 to 2:98, even more preferably of 1:99 by weight.

The powder paint according to the invention comprises a physical mixture by electrical conductivity when the carbon nanotubes are in an amount less than or equal to 1% by weight relative to the weight of the final paint formulation.

The amount of the physical mixture by electrical conductivity is of from 2% to 20%, preferably from 5% to 15%, more preferably of 10% by weight relative to the weight of the final paint formulation.

An example of powder paint according to the invention comprising the physical mixture by electrical conductivity is hereinafter indicated in table 1:

TABLE 1

| CAS - C.I. | COMPONENT DESCRIPTION | % |
|---|---|---|
|  | Saturated carboxylate polyester resin | 55.00% |
| 57843-53-5 | Catalyst additive | 3.00% |
| 26376-86-3 | Distending additive | 1.5% |
| C.I. 77891 | Titanium dioxide pigment | 5.8% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 22.82% |
|  | Physical mixture by Electrical conductivity | 10.00% |
|  |  | 100.00% |

When the carbon nanotubes are in an amount higher than 1% by weight relative to the weight of the final paint formulation, the powder paint according to the invention can comprise carbon nanotubes as they are, i.e. without the mixing with aluminum hydroxide.

In this case, carbon nanotubes are preferably in an amount of from 2% to 10%, preferably from 3% to 7%, even more preferably of 3.10% by weight relative to the weight of the final paint formulation and the graphite is preferably in an amount of from 5% to 20%, preferably from 7% to 15%, even more preferably of 10% by weight relative to the weight of the final paint formulation.

An example of powder paint according to the invention not comprising the physical mixture by electrical conductivity is hereinafter indicated in table 2:

TABLE 2

| CAS - C.I. | COMPONENT DESCRIPTION | % |
|---|---|---|
|  | Polyester resin **CRYLCOAT 2618-3 ( Allnex )** | 55.00% |
| 57843-53-5 | Catalyst additive | 3.00% |
| 26376-86-3 | Distending additive | 1.5% |
| C.I. 77891 | Titanium dioxide pigment | 5.8% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 19.72% |
| 7782-42-5 | GRAPHITE | 10.00% |
|  | CARBON NANOTUBES | 3.10% |
|  |  | 100.00% |

It can be noted that the carbon nanotubes are in an amount higher than 1% by weight relative to the weight of the final paint formulation and, therefore, must not be previously mixed with aluminum hydroxide. Therefore, the powder paint does not comprise a physical mixture by electrical conductivity.

The paint so far described can be obtained through a process that involves mixing of carbon nanotubes with aluminum hydroxide in a ratio by weight of from 1:5 to 1:15, preferably from 1:7 to 1:11, more preferably of 1:9 when said nanotubes are in a percentage by weight less than 1%, and then further mixing with graphite (preferably in a ratio by weight of 1:99), for constituting a physical mixture by electrical conductivity which will be then introduced in paint formulation.

When the amount of carbon nanotubes is higher than 1 % by weight relative to the weight of the paint formulation, nanotubes are not mixed with aluminum hydroxide but put into the paint as they are, together with graphite, in an amount between 2% and 10%, preferably between 3% and 7%, even more preferably of 3.10% by weight relative to the weight of the final paint formulation.

The powder paint according to the invention can also comprise graphene in an amount from 0.01% to 4.5%, preferably from 0.1 to 4.5%, by weight relative to the weight of the final paint formulation.

In said embodiment, the graphite is in an amount of from 0.5% to 5.5 % by weight relative to the weight of the final paint formulation, and the carbon nanotubes are in an amount of from 0.01% to 3.8%, preferably from 0.1 to 3.8%, by weight relative to the weight of the final paint formulation.

The powder paint comprising also graphene, in the specific indicated amounts, resulted to have high values of thermal dissipation.

In particular, in this embodiment both carbon nanotubes and graphene can be less than 1% relative to the weight of the final paint formulation.

In this case, it is necessary to form a physical mixture comprising graphene previously diluted with aluminum hydroxide in a ratio by weight of from 1:5 to 1:15, preferably from 1:7 to 1:11, more preferably of 1:9, carbon nanotubes previously diluted with aluminum hydroxide in a ratio by weight of from 1:5 to 1:15, preferably from 1:7 to 1:11, more preferably of 1:9, and graphite.

In the present invention, the physical mixture comprising graphite, and graphene and carbon nanotubes each previously mixed with aluminum hydroxide is called "physical mixture by thermal dissipation".

Advantageously, the physical mixture by thermal dissipation that can be present in the formulation of the paint according to the invention comprises graphene previously mixed with aluminum hydroxide, carbon nanotubes previously mixed with aluminum hydroxide, and graphite in a ratio by weight of 1:1:3.

An example of powder paint according to the invention comprising the physical mixture by electrical conductivity is hereinafter indicated in table 3:

TABLE 3

| CAS - C.I. | COMPONENT DESCRIPTION | % |
|---|---|---|
| | Polyester resin **CRYLCOAT 2618-3 ( Allnex)** | 55.00% |
| 57843-53-5 | Catalyst additive | 3.00% |
| 26376-86-3 | Distending additive | 1.5% |
| C.I. 77891 | Titanium dioxide pigment | 5.8% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 27.82% |
| | Physical mixture by thermal dissipation | 5.00% |
| | | 100.00% |

As shown in the experimental section, the powder paint comprising the physical mixture by thermal dissipation in an amount of 5% by weight relative to the weight of the final paint formulation has given the best result in terms of thermal dissipation (Example 1). Therefore, in a particularly preferred embodiment, the powder paint, comprises a physical mixture formed by graphene and carbon nanotubes each previously mixed with aluminum hydroxide advantageously in a ratio by weight of 1:9, and then with graphite. In said preferred embodiment, the powder paint according to the invention comprises a physical mixture by thermal dissipation in an amount of 5% by weight relative to the final paint formulation.

When carbon nanotubes and graphene are in an amount higher than 1% by weight relative to the weight of the final paint formulation, the powder paint according to the invention can comprise carbon nanotubes and graphene as they are, i.e. without the mixing with aluminum hydroxide.

In this case, the carbon nanotubes are preferably in an amount of from 2% to 10%, preferably from 3% to 7%, even more preferably of 3.80% by weight relative to the weight of the final paint formulation, the graphene is preferably in an amount of from 2% to 10%, preferably from 3% to 7%, even more preferably of 4.50% by weight relative to the weight of the final paint formulation, and graphite is preferably in an amount of from 2% to 20%, preferably from 3% to 15%, even more preferably of 5.5% by weight relative to the weight of the final paint formulation.

An example of powder paint according to the invention not comprising the physical mixture by thermal dissipation but graphene and carbon nanotubes not previously mixed with aluminum hydroxide is hereinafter indicated in table 4:

TABLE 4

| CAS - C.I. | COMPONENT DESCRIPTION (Allnex) | % |
|---|---|---|
| | Polyester resin **CRYLCOAT 2618-3** | 55.00% |
| 57843-53-5 | Catalyst additive | 3.00% |
| 26376-86-3 | Distending additive | 1.5% |
| C.I. 77891 | Titanium dioxide pigment | 5.8% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |

(continued)

| CAS - C.I. | COMPONENT DESCRIPTION (Allnex) | % |
|---|---|---|
| 2082-79-3 | Antioxidant and anti-UV additive | 0.10% |
| 7727-43-7 | Barium sulphate | 19.02% |
| NAIMOR | GRAPHENE | 4.50% |
|  | CARBON NANOTUBES | 3.80% |
| 7782-42-5 | GRAPHITE | 5.5% |
|  |  | 100.00% |

It can be noted that the graphene and carbon nanotubes are in an amount higher than 1% by weight relative to the weight of the final paint formulation and, therefore, must not be previously mixed with aluminum hydroxide.

The paint that comprises also graphene, in addition to graphite and carbon nanotubes, can be obtained through a process that involves mixing of graphene and carbon nanotubes each with aluminum hydroxide in a ratio by weight of from 1:5 to 1:15, preferably from 1:7 to 1:11, more preferably of 1:9 when said graphene and said nanotubes are in a percentage by weight less than 1% relative to the weight of the final paint formulation, and then further mixing with graphite, preferably in a ratio by weight of 1:1:3, for constituting a physical mixture by thermal dissipation which will be then introduced into the paint formulation.

The physical mixture by thermal dissipation whose components have a ratio by weight of 1:1:3 is hereinafter indicated in the table 5:

TABLE 5

| CAS | COMPONENT DESCRIPTION | % |
|---|---|---|
|  | Graphene previously mixed with aluminum hydroxide (1:9) | 20.00% |
|  | Carbon nanotubes previously mixed with aluminum hydroxide (1:9) | 20.00% |
| 7782-42-5 | Graphite | 60.00% |
|  | TOTAL | 100.00% |

When the amount of graphene and carbon nanotubes is higher than 1% by weight relative to the weight of the paint formulation, said graphene and said nanotubes are not mixed with aluminum hydroxide, but are added in the paint as they are, together with graphite.

According to the invention, the powder paint comprising graphite, carbon nanotubes and, optionally, graphene, comprises further components such as a polyester resin and one or more additives chosen from catalyst additive, distending additive, degassing additive, antioxidant and anti-UV additive.

An example of catalyst additive that can be present in the paint according to the invention is N,N,N',N'-tetrakis(2-hydroxypropyl)adipamide (CAS#: 57843-53-5).

An example of distending additive that can be present in the paint according to the invention is the ethylacrylate-co-2-ethylhexylacrylate copolymer (CAS#: 26376-86-3). An example of degassing additive that can be present in the paint according to the invention is α- hydroxybenzyl phenyl ketone (CAS#: 119-53-9).

An example of antioxidant and anti-UV additive that can be present in the paint according to the invention is octadecyl 3-(3,5-di-tert-butyl-4- hydroxyphenyl) propionate (CAS#: 2082-79-3).

The paint can further comprise at least a polyethylene wax, barium sulphate, at least a pigment. Examples of pigments that can be present in the paint according to the invention are titanium dioxide, yellow iron oxide pigment, black iron oxide pigment, blue ultramarine.

The Applicant has advantageously observed that powder paints with high thermal dissipation can be obtained thanks to a process that comprises a step of making a physical mixture aimed at diluting the significant additives or the conductive components graphene and carbon nanotubes so as to make them easily usable in the production process.

Said physical mixture consists in the previous mixture of carbon nanotubes and of graphene with aluminum hydroxide that is compatible both with conductive components and with the other normally used raw materials.

This allows, with a particular mixing process of each single conductive component with aluminum hydroxide, separately carried out, to reduce the initial volume of the component itself and to obtain its homogeneous distribution in the filler.

The realization of a physical mixture of conductive components, previously eventually mixed with aluminum hydroxide, originates the key component for obtaining the thermal dissipation and electrical conductivity effects.

This key component is to be weighted and added to the other weighted raw materials for proceeding with the pre-mixing process of raw materials; process carried out with the aid of an opportune industrial mixer by following predefined procedures and parameters.

In particular, the nanotubes previously mixed with aluminum hydroxide and the graphene previously mixed with aluminum hydroxide are arranged in an opportune 500 liter container within which, subsequently, other raw materials that compose the final formulation are added.

Said container is hooked to an overturning mixer (for example, Herfeld overturning mixer) with which the automatic mixing is carried out for about 3 minutes at 120 rpm for allowing the perfect homogenization of all the components.

The subsequent process, i.e. an extrusion, provides for the extrusion of the previously mixed material, through the use of a twin-screw extruder (for example, SBS twin-screw extruder mod. EBVP37SBS) using a pair equal to 70% and 250 rpm.

At this point, the molten product is cooled among calenders cooled with water at 7°C, then run on a belt, cooled at the same temperatures. At the end of the belt, the product is reduced in flakes by a crusher.

These flakes are subsequently subjected to a pulverization in an opportune peg mill (for example, SBS peg mill mod MITA 40-02). In this crusher it is present a classifier cyclone that selects the finest particles by eliminating them, and a vibro-sieve that provides for the elimination of the biggest particles.

The deriving result corresponds to a powder with a granulometry of from 20 $\mu$m to 120 $\mu$m, preferably from 40 $\mu$m to 100 $\mu$m, even more preferably from 50 $\mu$m to 60 $\mu$m.

In a particularly preferred embodiment, the maximum concentration of paint particles (about 90%) is of from 50 $\mu$m to 60 $\mu$m.

This granulometric range allows, in the step of final application of the product, that each single particle is perfectly electrostatically charged ensuring a homogeneous application (final thickness of the film) of the product on the final piece.

Therefore, the granulometry of the powder present in the paint according to the invention is of from 20 $\mu$m to 120 $\mu$m, preferably from 40 $\mu$m to 100 $\mu$m, more preferably from 50 $\mu$m to 60 $\mu$m, said sizes being referred to the diameter of a powder grain present in the paint.

Therefore, a second aspect of the present invention refers to a process for producing the powder paint object of the invention that comprises the steps of:

a) subjecting graphite, carbon nanotubes and, optionally, graphene to mixing together with at least one further component chosen from polyester resin, one or more additives chosen from catalyst additive, distending additive, degassing additive, antioxidant and anti-UV additive, at least one polyethylene wax, at least one pigment and barium sulphate, resulting in a homogeneous mixture;
b) extruding the homogeneous mixture according to step (a) to obtain a molten product;
c) cooling the molten product and reducing it to flakes by means of a crusher; and
d) subjecting said flakes to pulverization.

The carbon nanotubes and the graphene in the step a) of the process can be each previously mixed with aluminum hydroxide, advantageously in a ratio of 1:9.

Therefore, in an embodiment, the process comprises the step a') of subjecting said carbon nanotubes and, optionally, said graphene to mixing with aluminum hydroxide, preferably in a ratio by weight of the conductive component and aluminum hydroxide of 1:9.

This step a') is carried out when the amount of nanotubes and, optionally, of graphene is less than or equal to 1% by weight relative to the weight of the final paint formulation. In said embodiment, the process comprises in the step a) the mixing of a physical mixture comprising the graphite, the nanotubes according to the step a'), and, optionally, the graphene according to the step a') with at least a further component chosen from polyester resin, one or more additives chosen from catalyst additive, distending additive, degassing additive, antioxidant and anti-UV additive, at least one polyethylene wax, at least one pigment and barium sulphate, resulting in a homogeneous mixture.

The Applicant has advantageously observed that a physical mixture of conductive components of the paint according to the invention (graphite, carbon nanotubes and graphene) generates an unexpected synergy.

It has been evaluated that this synergy has allowed the decrease of percentages used of each single component while still maintaining very high values of thermal dissipation and electrical conductivity.

The decrease of percentages of conductive component results in a decrease of costs and a simplification of its use in the productive step.

Already at the experimental stage, the Applicant had to face the technical problem of how to manage and process the carbon nanotubes and the graphene since these components, even if used in relatively low percentages, present very high volume and volatility.

The inventive solution to this technical problem has been the realization of a physical mixture functional to the dilution of single conductive components, using aluminum hydroxide as filler compatible with the other raw materials used for the preparation of powder paints according to the invention.

## DESCRIPTION OF FIGURES

Figure 1 shows the graph of thermal dissipation of the paint according to the example 1. The curve A is related to the formulation tested in the example 1, whereas the curve A' is related to the comparison formulation tested in the example 1.

Figure 2 shows the graph of thermal dissipation of the paint according to the example 2. The curve B is related to the formulation tested in the example 2, whereas the curve B' is related to the comparison formulation tested in the example 2.

Figure 3 shows the graph of thermal dissipation of the paint according to the example 3. The curve C is related to the formulation tested in the example 2, whereas the curve C' is related to the comparison formulation tested in the example 3.

Figure 4 shows the graph of thermal dissipation of the paint according to the example 4. The curve D is related to the formulation tested in the example 2, whereas the curve D' is related to the comparison formulation tested in the example 4.

Figure 5 shows the graph of thermal dissipation of the paint according to the example 5. The curve E is related to the formulation tested in the example 2, whereas the curve E' is related to the comparison formulation tested in the example 5.

Figure 6 shows the graph of thermal dissipation of the paint according to the example 6. The curve F is related to the formulation tested in the example 2, whereas the curve F' is related to the comparison formulation tested in the example 2.

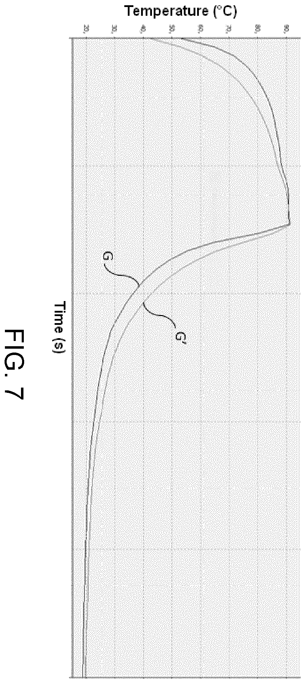

Figure 7 shows the graph of thermal dissipation of a paint comprising 4.50% of graphene, 3.80% of nanotubes and 5.5% of graphite. The curve G is related to the formulation indicated in Table 4, whereas the curve G' is related to the comparison formulation tested not comprising the conductive components.

## EXAMPLES

The Applicant has tested different formulations in order to evaluate their capacity of thermal dissipation and their electrical conductivity.

Hereinafter are indicated the formulations of a paint according to the invention, that has resulted to have high thermal dissipation (example 1) and comparison paints not resulted to be suitable for use (examples 2-6).

Example 7 refers to a paint comprising a physical mixture by electrical conductivity that has resulted to have high electrical conductivity and compared with paints having different formulations. Example 8 refers instead to the conductivity results of a paint comprising graphite and carbon nanotubes in percentage higher than 1%.

In the examples 1-6 the final performances of paints were detected by carrying out a test on a painted piece exposed to a laboratory oven at a temperature and times monitored and registered by probes connected to the painted piece and to a temperature recorder "GRANT" or through the use of a thermal camera "BOSCH GTC 400 C" according to inner methods under quality system control ISO9001.

The test involves heating of the painted piece starting from temperatures of 40°C and reaching 90°C. Subsequently the piece, extracted from the oven, is allowed to cool down to room temperature in a predefined time.

For the examples from 1 to 6 control tests have been carried out by using a piece painted with powder paint not containing the conductive components (graphene, graphite and carbon nanotubes).

## Example 1: **Paint comprising a physical mixture by thermal dissipation (paint according to the invention)**

The formulation used for the production of a sample of powder paint is hereinafter indicated:

| CAS - C.I. | COMPONENT DESCRIPTION | % |
|---|---|---|
| | Polyester resin CRYLCOAT 2618-3 (Allnex) | 55.00% |
| 57843-53-5 | Catalyst additive | 3.00% |

(continued)

| CAS - C.I. | COMPONENT DESCRIPTION | % |
|---|---|---|
| 26376-86-3 | Distending additive | 1.5% |
| C.I. 77891 | Titanium dioxide pigment | 5.8% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 27.82% |
| Physical mixture by thermal dissipation with aluminum hydroxide (filler) | | 5.00% |
| | | 100.00% |

This formulation is the formulation indicated in table 3. In particular, in this formulation is present a physical mixture by thermal dissipation formed by graphite, and carbon nanotubes and graphene each previously mixed with aluminum hydroxide in a ratio of 1:9.

The percentage of thermal dissipation obtained with a paint comprising this formulation is of 16.50%.

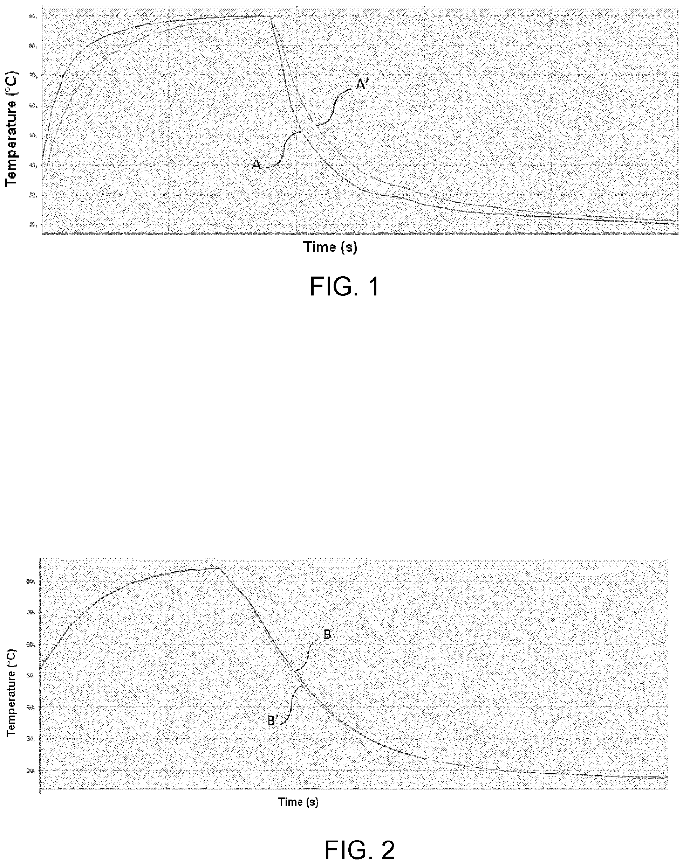

For the present example, a control test has been carried out by using a piece painted with powder paint not containing a physical mixture by thermal dissipation with aluminum hydroxide (filler) (curve A' in figure 1), by replacing it with the necessary amount of barium sulphate.

### Example 2: Paint comprising graphite

The formulation used for the production of a sample of powder paint is hereinafter indicated:

| CAS - C.I. | COMPONENT DESCRIPTION | % |
|---|---|---|
| | Polyester resin CRYLCOAT 2618-3 (Allnex) | 55.00% |
| 57843-53-5 | Catalyst additive | 3.00% |
| 26376-86-3 | Distending additive | 1.50% |
| C.I. 77891 | Titanium dioxide pigment | 5.80% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 22.82% |
| | Graphite | 10.00% |
| | | 100.00% |

The percentage of thermal dissipation obtained with a paint comprising this formulation is of 2.40%.

For the present example, a control test has been carried out by using a piece painted with powder paint not containing graphite (curve B' in figure 2), by replacing it with the necessary amount of barium sulphate.

### Example 3: Paint comprising graphene pre-mixed with aluminum hydroxide

The formulation used for the production of a sample of powder paint is hereinafter indicated:

| CAS - C.I. | COMPONENT DESCRIPTION | % |
|---|---|---|
| | Polyester resin CRYLCOAT 2618-3 (Allnex) | 55.00% |
| 57843-53-5 | Catalyst additive | 3.00% |
| 26376-86-3 | Distending additive | 1.50% |

(continued)

| CAS - C.I. | COMPONENT DESCRIPTION | % |
|---|---|---|
| C.I. 77891 | Titanium dioxide pigment | 5.80% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 2.82% |
| Graphene pre-mixed with aluminum hydroxide | | 30.00% |
| | | 100.00% |

In particular, in this formulation is present only the graphene that has been previously mixed with aluminum hydroxide in a ratio of 1:9.

The percentage of thermal dissipation obtained with a paint comprising this formulation is of 2.50%.

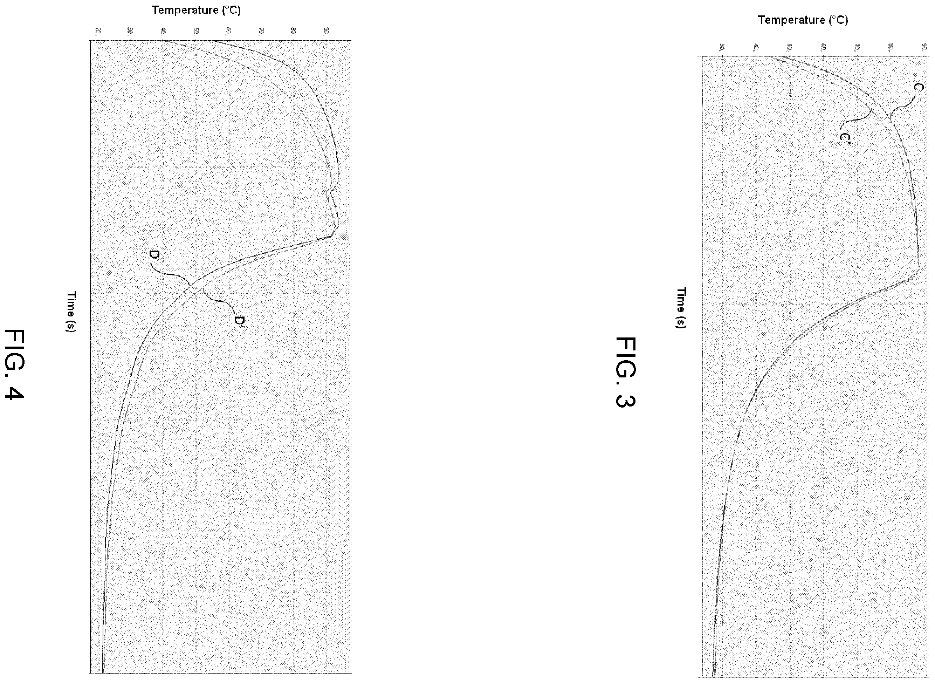

For the present example, a control test has been carried out by using a piece painted with powder paint not containing graphene pre-mixed with aluminum hydroxide (curve C' in figure 3), by replacing it with the necessary amount of barium sulphate.

**Example 4: Paint comprising graphite and graphene pre-mixed with aluminum hydroxide**

The formulation used for the production of a sample of powder paint is hereinafter indicated:

| CAS - C.I. | COMPONENT DESCRIPTION | % |
|---|---|---|
| | Polyester resin CRYLCOAT 2618-3 (Allnex) | 55.00% |
| 57843-53-5 | Catalyst additive | 3.00% |
| 26376-86-3 | Distending additive | 1.50% |
| C.I. 77891 | Titanium dioxide pigment | 5.80% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 13.82% |
| Graphite | | 4.00% |
| Graphene pre-mixed with aluminum hydroxide | | 15.00% |
| | | 100.00% |

In particular, in this formulation is present graphite and graphene previously mixed with aluminum hydroxide in a ratio of 1:9.

The percentage of thermal dissipation obtained with a paint comprising this formulation is of 8.00%.

For the present example, a control test has been carried out by using a piece painted with powder paint not containing graphene pre-mixed with aluminum hydroxide and graphite (curve D' in figure 4), by replacing it with the necessary amount of barium sulphate.

**Example 5: Paint comprising a physical mixture by thermal dissipation with not suitable filler**

The formulation used for the production of a sample of powder paint is hereinafter indicated:

| CAS - C.I. | COMPONENT DESCRIPTION | % |
|---|---|---|
| | Polyester resin CRYLCOAT 2618-3 (Allnex) | 55.00% |

(continued)

| CAS - C.I. | COMPONENT DESCRIPTION | % |
|---|---|---|
| 57843-53-5 | Catalyst additive | 3.00% |
| 26376-86-3 | Distending additive | 1.50% |
| C.I. 77891 | Titanium dioxide pigment | 5.80% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 27.82% |
| Physical mixture by thermal dissipation with calcium carbonate (filler) | | 5.00% |
| | | 100.00% |

In particular, in this formulation is present a physical mixture by thermal dissipation formed by graphite, and carbon nanotubes and graphene each previously mixed with calcium carbonate (CAS #: 471-34-1) in a ratio of 1:9.

In this formulation a different type of filler has been used, i.e. calcium carbonate. Compared to the formulation comprising a physical mixture realized with carbon nanotubes and graphene pre-mixed with aluminum hydroxide, this formulation has a lower percentage of thermal dissipation.

The percentage of thermal dissipation obtained with a paint comprising this formulation is of 6.50%.

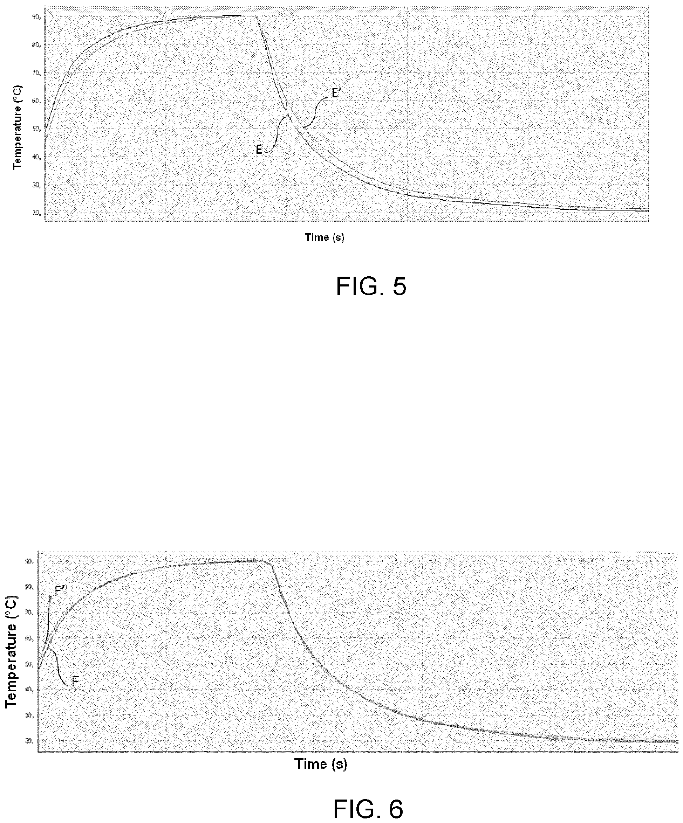

For the present example, a control test has been carried out by using a piece painted with powder paint not containing physical mixture by thermal dissipation with calcium carbonate (curve E' in figure 5), by replacing it with the necessary amount of barium sulphate.

**Example 6: Paint comprising carbon nanotubes pre-mixed with aluminum hydroxide**

The formulation used for the production of a sample of powder paint is hereinafter indicated:

| CAS - C.I. | COMPONENT DESCRIPTION | % |
|---|---|---|
| | Polyester resin CRYLCOAT 2618-3 (Allnex) | 55.00% |
| 57843-53-5 | Catalyst additive | 3.00% |
| 26376-86-3 | Distending additive | 1.50% |
| C.I. 77891 | Titanium dioxide pigment | 5.80% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 2.82% |
| Carbon nanotubes pre-mixed with aluminum hydroxide | | 30.00% |
| | | 100.00% |

In particular, in this formulation are present only the carbon nanotubes previously mixed with aluminum hydroxide in a ratio of 1:9.

The percentage of thermal dissipation obtained with a paint comprising this formulation is of 1.70%.

For the present example, a control test has been carried out by using a piece painted with powder paint not containing carbon nanotubes pre-mixed with aluminum hydroxide (curve F' in figure 6), by replacing it with the necessary amount of barium sulphate.

**Example 7: Paint comprising a physical mixture by electrical conductivity**

For the present example various powder paints have been made and compared among them so as to evaluate the values of electrical conductivity (Table 6).

The final performances of realized paints have been measured by a conductivity meter. The voltammetric test was set up with an ISO-PECH IPS-405 power supply, a "FLUKE 87" voltmeter and a "FLUKE 189" microammeter.

The 4-wires reading probe used had an inner major diameter of 3 mm and an outer minor diameter of 58 mm. In this way the absolute resistance has been detected and then calculated the surface resistivity/conductivity. The formula used is the following:

$$Rs = V/I * (2*\pi / \int (R2/R1))$$

The measurement is carried out on suitable metal plates previously painted with an insulating powder paint and subsequently painted with the conductive powder paint of the invention (indicated in Table 6 as paint "56/21 V1").

All the control tests have been carried out in comparison to a plate painted with powder paint not containing the conductive components as specified in the present patent application.

In Table 6 are indicated the values obtained in the voltametric test for the samples indicated:

TABLE 6

| Sample | Measured voltage [V] | Measured current [uA] | Absolute resistance [KΩ] | Surface resistivity [KΩ/sq] | Surface conductivity [nS/sq] | High/medium/low conductivity range |
|---|---|---|---|---|---|---|
| 1 - 56/21 V0 | 39.95 | 3.88 | 10,296.39 | 98,133.59 | 10.19 | low (NEGATIVE) |
| 2 - 56/21 V1 | 2.80 | 2,020.00 | 1.39 | 13.22 | 75,639.84 | high (BEST RESULT) |
| 3 - 56/21 V3 | 9.94 | 566.00 | 17.56 | 167.38 | 5,974.44 | medium (MEDIOCRE) |
| 4 - 13/20 V0 | 39.95 | 4.06 | 9,839.90 | 93,782.84 | 10.66 | low (NEGATIVE) |

In particular, the sample 56/21 V0 comprises only graphite as conductive component, the sample 56/21 V1 comprises a physical mixture by electrical conductivity, the sample 56/21 V3 comprises a physical mixture composed by graphite and graphene dispersed in aluminum hydroxide (5-7 layers) as conductive components and the sample 13/20 is a traditional powder paint not comprising the conductive components.

Hereinafter are indicated the formulations to which the data in Table 6 are referred:

Sample 1 - 56/21 V0:

| CAS - C.I. | COMPONENT DESCRIPTION | % |
|---|---|---|
|  | Polyester resin CRYLCOAT 2618-3 (Allnex) | 55.00% |
| 57843-53-5 | Catalyst additive | 3.00% |
| 26376-86-3 | Distending additive | 1.50% |
| C.I. 77891 | Titanium dioxide pigment | 5.80% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 22.82% |
|  | GRAPHITE | 10.00% |
|  |  | 100.00% |

Sample 2 - 56/21 V1

The formulation of sample 1 - 56/21 V1 is the formulation indicated in the Table 1 of the present patent application.

Sample 3 - 56/21 V3:

| CAS - C.I. | COMPONENT DESCRIPTION | % |
|---|---|---|
| | Polyester resin CRYLCOAT 2618-3 (Allnex) | 55.00% |
| 57843-53-5 | Catalyst additive | 3.00% |
| 26376-86-3 | Distending additive | 1.50% |
| C.I. 77891 | Titanium dioxide pigment | 5.80% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 22.82% |
| | Physical mixture formed by graphite and graphene mixed with aluminum hydroxide | 10.00% |
| | | 100.00% |

The physical mixture in said formulation is formed by 99% of graphite and 1% of graphene previously mixed with aluminum hydroxide.

Sample 4 - 13/20 V0:

The formulation of sample 4 - 13/20 V0, hereinafter indicated, is the formulation of a traditional paint.

| CAS - C.I. | COMPONENT DESCRIPTION | % |
|---|---|---|
| | Polyester resin CRYLCOAT 2618-3 (Allnex) | 55.00% |
| 57843-53-5 | Catalyst additive | 3.00% |
| 26376-86-3 | Distending additive | 1.50% |
| C.I. 77891 | Titanium dioxide pigment | 5.80% |
| C.I. 42 | Iron oxide yellow pigment | 0.08% |
| C.I. 11 | Iron oxide black pigment | 0.38% |
| C.I. 29 | Blue ultramarine pigment | 0.82% |
| 9002-88-4 | Polyethylene wax | 0.30% |
| 119-53-9 | Degassing additive | 0.20% |
| 2082-79-3 | Antioxidant and anti-UV additive | 0.10% |
| 7727-43-7 | Barium sulphate | 32.82% |
| | | 100.00% |

**Example 8: Paint comprising graphite and carbon nanotubes in percentage higher than 1%**

In the present experiment have been evaluated voltage, current, surface resistance and resistivity values according to the method described in the example 7 for a paint comprising graphite and carbon nanotubes in percentage higher than 1%.

The formulation of the paint of which these parameters have been evaluated comprises 10.00% graphite and 3.10% of carbon nanotubes. This formulation is indicated in the Table 2 of the present patent application and corresponds to the sample 5 of Table 7.

The voltage, current, surface resistance and resistivity values of this paint have been compared with the ones of a traditional paint (13/20 V0) not comprising the conductive components as defined in the present patent application.

The formulation of the traditional paint 13/20 V0 is indicated in the example 7 (see sample 4 - 13/20 V0).

TABLE 7

| Sample | Measured voltage [V] | Measured current [uA] | Absolute resistance [KΩ] | Surface resistivity [KΩ/sq] | Surface conductivity [nS/sq] | High/medium/low conductivity range |
|---|---|---|---|---|---|---|
| 5 | 2.88 | 1,169.00 | 2.46 | 23.45 | 42,647.45 | high (BEST RESULT) |
| 4 - 13/20 V0 | 39.95 | 4.06 | 9,839.90 | 93,782.84 | 10.66 | low (NEGATIVE) |

**Claims**

1. Powder paint comprising graphite in an amount of 0.15% to 10% by weight relative to the weight of the final paint formulation and carbon nanotubes in an amount of 0.01% to 3.8%, preferably of 0.1% to 3.8%, by weight relative to the weight of the final paint formulation.

2. Powder paint according to claim 1, wherein the graphite is present in an amount of 4% to 10%, preferably of 7% to 10% by weight relative to the weight of the final paint formulation.

3. Powder paint according to claim 1 or 2, wherein said carbon nanotubes are in an amount of less than or equal to 1% by weight relative to the final paint formulation.

4. Powder paint according to claim 3, comprising a physical mixture comprising graphite and carbon nanotubes, wherein said carbon nanotubes in said physical mixture are previously mixed with aluminum hydroxide in a ratio by weight of from 1:5 to 1:15, preferably of from 1:7 to 1:11, more preferably of 1:9.

5. Powder paint according to claim 4, wherein said physical mixture comprises carbon nanotubes previously mixed with aluminum hydroxide and graphite in a ratio by weight of from 5:95 to 2:98, preferably of 1:99.

6. Powder paint according to claim 1, further comprising graphene in an amount of from 0.01% to 4.5%, preferably from 0.1 to 4.5%, by weight relative to the weight of the final paint formulation.

7. Powder paint according to claim 6, wherein said graphene is in an amount of less than or equal to 1% by weight relative to the final paint formulation and said carbon nanotubes are in an amount of less than or equal to 1% by weight relative to the final paint formulation.

8. Powder paint according to the preceding claim, comprising a physical mixture comprising graphite, graphene and carbon nanotubes, wherein said graphene and said carbon nanotubes in said physical mixture are each previously mixed with aluminum hydroxide in a ratio by weight of from 1:5 to 1:15, preferably from 1:7 to 1:11, more preferably of 1:9.

9. Powder paint according to claim 4, wherein said physical mixture comprises carbon nanotubes previously mixed with aluminum hydroxide, graphene previously mixed with aluminum hydroxide and graphite in a ratio of 1:1:3 by weight.

10. Powder paint according to any one of the preceding claims, further comprising at least one polyester resin, one or more additives chosen from catalyst additive, distending additive, degassing additive, antioxidant and anti-UV additive, at least one polyethylene wax, at least one pigment and barium sulfate.

11. Powder paint according to any one of the preceding claims, wherein the particle size of said powder is from 20 $\mu$m to 120 $\mu$m, preferably from 40 $\mu$m to 100 $\mu$m, preferably from 50 $\mu$m to 60 $\mu$m, preferably from 50 $\mu$m to 60 $\mu$m.

12. A process for producing a powder paint according to any one of claims 1 to 11 comprising the steps of:

(a) subjecting graphite, carbon nanotubes and, optionally, graphene to mixing together with at least one further component chosen from polyester resin, one or more additives chosen from catalyst additive, distending additive, degassing additive, antioxidant and anti-UV additive, at least one polyethylene wax, at least one pigment and barium sulphate, resulting in a homogeneous mixture;

(b) extruding the homogeneous mixture according to step (a) to obtain a molten product;

(c) cooling the molten product and reducing it to flakes by means of a crusher; and

(d) subjecting the flakes to pulverization.

13. Process according to claim 12, comprising in advance of step a), a step a') of subjecting said carbon nanotubes and, optionally, said graphene to mixing with aluminum hydroxide, **characterized in that** said step a) comprises mixing a physical mixture comprising graphite, nanotubes according to step a') and, optionally graphene, according to step a') with at least one further component according to step a).

FIG. 1

FIG. 2

FIG. 3

FIG. 4

FIG. 5

FIG. 6

FIG. 7

Europäisches
Patentamt

European
Patent Office

Office européen
des brevets

## EUROPEAN SEARCH REPORT

Application Number

EP 22 20 7804

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 752 759 A (TIANCHANG JINLING ELECTRONIC CO LTD) 31 May 2017 (2017-05-31) * claims 1-10; embodiment 2; embodiments 1, 3 and 4 * | 1-13 | INV. C08K3/04 C09D5/03 C09D7/61 |
| X | TW 201 723 141 A (CAI YI-LIN [TW]) 1 July 2017 (2017-07-01) * claim 1; paragraphs [0004-0014]; examples 1 and 2 * | 1-13 | |
| X | CN 112 812 660 A (NIUMO GRAPHENE APPLIED TECH CO LTD) 18 May 2021 (2021-05-18) * claim 5; paragraphs [0014, 0017, 0021]; examples 1-4 * | 1-13 | |
| X | CN 108 997 811 A (CHANGZHOU CHENGFENG MACHINERY FACTORY) 14 December 2018 (2018-12-14) * claims 1-4; examples 1-3 * | 1-13 | |
|  |  |  | TECHNICAL FIELDS SEARCHED (IPC) |
|  |  |  | C08K C09D |

The present search report has been drawn up for all claims

| Place of search | Date of completion of the search | Examiner |
|---|---|---|
| Munich | 27 April 2023 | Kositza, Matthias |

EPO FORM 1503 03.82 (P04C01)

## EP 4 190 849 A1

### ANNEX TO THE EUROPEAN SEARCH REPORT
### ON EUROPEAN PATENT APPLICATION NO.

EP 22 20 7804

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2023

| Patent document cited in search report | | Publication date | Patent family member(s) | Publication date |
|---|---|---|---|---|
| CN 106752759 | A | 31-05-2017 | NONE | |
| TW 201723141 | A | 01-07-2017 | NONE | |
| CN 112812660 | A | 18-05-2021 | NONE | |
| CN 108997811 | A | 14-12-2018 | NONE | |

For more details about this annex : see Official Journal of the European Patent Office, No. 12/82

**EP 4 190 849 A1**

## REFERENCES CITED IN THE DESCRIPTION

**Non-patent literature cited in the description**

- *CHEMICAL ABSTRACTS,* 57843-53-5
- *CHEMICAL ABSTRACTS,* 26376-86-3
- *CHEMICAL ABSTRACTS,* 119-53-9
- *CHEMICAL ABSTRACTS,* 2082-79-3
- *CHEMICAL ABSTRACTS,* 471-34-1